# EUROPÄISCHE PATENTANMELDUNG

(11) **EP 1 316 575 A1**
(43) Veröffentlichungstag der Anmeldung: **04.06.2003**
(21) Anmeldenummer: 01128557.4
(22) Anmeldetag: 29.11.2001
(51) Int. Cl.: C08G 63/46, C08G 63/50, C08J 3/18, C08G 63/20

(54) **Weichmacher auf der Basis der Umesterung von PET mit organischen Monohydroxylverbindungen und/oder Monohydroxypolyethern sowie diese Weichmacher enhaltende Artikel**

(71) Anmelder: Sika Schweiz AG, 8064 Zürich (CH)
(72) Erfinder: Slongo, Mario, Dr., 1712 Tafers (CH); Guyer, Peter, Dr., 3366 Bollodingen (CH); Würms, Norbert, Dr., 1717 St. Ursen (CH)
(74) Vertreter: Isler, Jörg

(57) **Zusammenfassung**

Die Erfindung betrifft Verbindungen, die durch Umesterung von Polyethylenterephthalat (PET) mit entweder mindestens einer organischen Monohydroxylverbindung, die acht bis achtzehn Kohlenstoffatome aufweist, und/oder mindestens einem Monohydroxylpolyether erhältlich sind. Diese Verbindungen werden im Rahmen von Weichmachern für reaktive Klebstoffe oder Gebrauchskunststoffe verwendet. Ausserdem betrifft die Erfindung Verfahren zur Herstellung solcher Verbindungen sowie Artikel aus Gebrauchskunststoff, welche derartige Artikel enthalten, besonders bevorzugt flexible PVC-Folien. Im Rahmen eines solchen Verfahrens setzt man Polyethylenterephthalat (PET) mit entweder mindestens einer organischen Monohydroxylverbindung, die acht bis achtzehn Kohlenstoffatome aufweist, und/oder mindestens einem Monohydroxylpolyether um. Besonders bevorzugt als organische Monohydroxylverbindung sind n-Nonanol und/oder n-Dodecanol.

## Beschreibung

### Technisches Gebiet und Stand der Technik

Die Erfindung betrifft Verbindungen, die durch Umesterung von Polyethylenterephthalat (PET) mit mindestens einer organischen Monohydroxylverbindung erhältlich sind, die acht bis achtzehn Kohlenstoffatome aufweist, und/oder mit Monohydroxypolyethern. Ausserdem betrifft die Erfindung ein Verfahren zur Herstellung solcher Verbindungen sowie Artikel aus Gebrauchskunststoff oder reaktive Klebstoffe, welche derartige Verbindungen enthalten. Im Rahmen eines solchen Verfahrens setzt man Polyethylenterephthalat (PET) mit mindestens einer organischen Monohydroxylverbindung um, die acht bis achtzehn Kohlenstoffatome aufweist, oder aus der Gruppe der Monohydroxypolyethern stammt. Als organische Monohydroxylverbindung sind n-Nonanol und n-Dodecanol sowie die Monoalkylether von Polypropylenglykolen besonders bevorzugt, gemäss nachfolgendem Reaktionsschema:

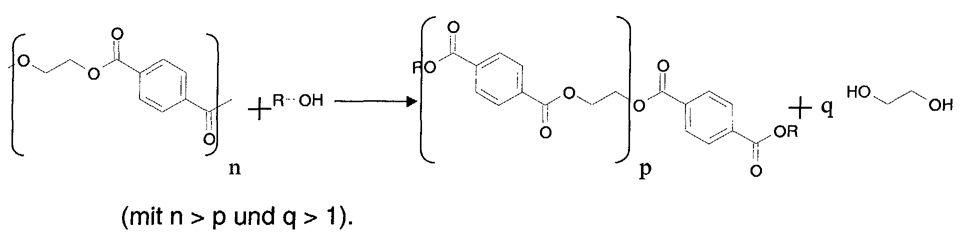

Weichmacher und ihre technische Anwendung in Gebrauchskunststoffen sind bereits seit langem bekannt. So werden namentlich ortho-Phthalsäureester sowie Adipinsäureester bereits seit vielen Jahren als Weichmacher in handelsüblichen Folien, Filmen, Profilen und anderen Formteilen aus Kunststoff verwendet.
Solche Weichmacher des Standes der Technik neigen allerdings dazu, aus den Kunststoffartikeln oder aus einer Klebstoffmasse herauszudiffundieren und sind in der Regel zudem relativ flüchtige Substanzen. Auch die Resistenz üblicher Weichmacher gegen den Befall von Mikroorganismen oder Pilzen lässt zumeist zu wünschen übrig, wodurch dieser Migrationseffekt noch verstärkt wird. Daher wird die gesamte Umgebung der Kunststoffteile langfristig belastet, während gleichzeitig der Weichmachereffekt im Laufe der Zeit sukzessive nachlässt. Das Formteil, bzw. die Klebstoffschicht wird immer härter und spröder und schliesslich vollkommen unbrauchbar. Somit haben die mit derart üblichen Weichmachern behandelten Formteile oder Klebstoffschichten zumeist nach einiger Gebrauchsdauer relativ dürftige mechanische Eigenschaften.
Ausserdem weisen konventionelle Weichmacher auch weitere, technisch bedingte Nachteile auf: Da es sich um zumeist flüssige Substanzen mit niedrigen Schmelzpunkten handelt, ist die Migrations- und Diffussionstendenz naturgemäss besonders ausgeprägt.

### Aufgabe und Lösung

Es ist daher Aufgabe der vorliegenden Erfindung, als Weichmacher brauchbare Verbindungen zur Verfügung zu stellen, welche die vorstehend beschriebenen Nachteile und Probleme der Weichmacher des Standes der Technik nicht aufweisen, bzw. diese umgehen können. Es wurde jetzt unerwartet gefunden, dass diese Aufgabe durch die Verbindungen gemäss der Merkmalskombination des nachstehenden Patentanspruchs 1 gelöst werden kann. Insbesondere werden im Rahmen von Weichmachern für Kunststoffformteile oder reaktive Klebstoffe verwendbare Verbindungen zu Verfügung gestellt, deren Schmelzpunkt deutlich oberhalb der Raumtemperatur liegt und die somit bei Raumtemperatur in problemlos dosierfähiger und leicht handhabbarer Pulverform vorliegen. Auch die störenden Diffusions- und Migrationseffekte treten bei diesen pulverförmigen Weichmachern gemäss der Erfindung nicht auf. Zudem wurde überraschend gefunden, dass die mit den erfindungsgemässen Verbindungen behandelten Formteile oder Klebstoffschichten erheblich resistenter gegen Mikroben sind als die Weichmacher des Standes der Technik und auch bessere mechanische Eigenschaften aufweisen.

### Zusammenfassung der Erfindung

Die vorliegende Erfindung betrifft Verbindungen, die durch Umesterung von Polyethylenterephthalat (PET) mit entweder mindestens einer organischen Monohydroxylverbindung erhältlich sind, die acht bis achtzehn Kohlenstoffatome aufweist, und/oder mindestens einem Monohydroxylpolyether. Bevorzugt handelt es sich bei dieser organischen Monohydroxylverbindung um lineare oder verzweigte Moleküle mit zehn bis fünfzehn, vorzugsweise neun oder zwölf Kohlenstoffatome, insbesondere um n-Nonanol oder n-Dodecanol.

Alternativ können auch Monohydroxypolether, insbesondere Alkylether der Polyethylenglykole oder Polypropylenglykole zur Umesterung verwendet werden. Als besonders vorteilhaft haben sich die C1-C4 Alkylether der Polypropylenglykole erwiesen.

Bevorzugt wird zur Herstellung von erfindungsgemässen Verbindungen ein molarer Stoffmengenüberschuss an organischer Monohydroxylverbindung vorgelegt, vorzugsweise mindestens ein doppelter Stoffmengenüberschuss gegenüber der vorgelegten Stoffmenge Polyethylenterephthalat (PET). Bevorzugt handelt es sich bei dem vorgelegten Polyethylenterephthalat (PET) um handelsüblichen Gebrauchskunststoff in entsprechend vorbehandelter Form, vorzugsweise um gereinigte und zerkleinerte Flaschen, Filme, Profile, Folien oder Kombinationen davon. Diese erfindungsgemässen Verbindungen werden bevorzugt im Rahmen von Weichmachern verwendet, die zur Verwendung im Rahmen üblicher Gebrauchskunststoffe oder reaktiver Klebstoffe geeignet sind. Die Erfindung betrifft auch aus üblichen Gebrauchskunststoffen bestehende, solche Weichmacher umfassende Artikel, vorzugsweise in Form von Formteilen, Filmen, Folien oder Profilen. Bevorzugt bestehen diese Artikel aus üblichen Gebrauchskunststoffen auf der Basis von Homopolymeren und/oder Copolymeren. Diese können insbesondere Monomerkomponenten oder Mischungen oder Kombinationen oder Derivate derselben auf der Basis nachfolgender funktioneller Gruppen umfassen: Olefine, gesättigte oder ungesättigte Carbonsäuren, Acrylate, Alkohole, Amine, Imine, Isocyanate oder Epoxigruppen. Insbesondere handelt es sich bei den besagten Artikeln um Folien auf der Basis von Polyvinylchlorid (PVC). Die Erfindung betrifft auch ein Verfahren zur Herstellung von im Rahmen von Weichmachern für Gebrauchskunststoffe oder reaktiven Klebstoffen verwendbaren Verbindungen. Dabei wird Polyethylenterephthalat (PET) mit mindestens einer organischen Monohydroxylverbindung umgesetzt, die acht bis achtzehn Kohlenstoffatome aufweist. Bevorzugt handelt es sich bei dieser organischen Monohydroxylverbindung um lineare oder verzweigte Moleküle mit zehn bis fünfzehn, vorzugsweise neun oder zwölf Kohlenstoffatome, insbesondere um n-Nonanol oder n-Dodecanol. Bevorzugt wird im Rahmen des erfindungsgemässen Verfahrens ein molarer Stoffmengenüberschuss an organischer Monohydroxylverbindung vorgelegt, vorzugsweise mindestens ein doppelter Stoffmengenüberschuss gegenüber der vorgelegten Stoffmenge Polyethylenterephthalat (PET). Bevorzugt handelt es sich bei dem vorgelegten Polyethylenterephthalat (PET) um handelsüblichen Gebrauchskunststoff in entsprechend vorbehandelter Form, vorzugsweise um gereinigte und zerkleinerte Flaschen, Filme, Profile, Folien oder Kombinationen davon. Alternativ kann die Umesterung auch mit Monohydroxylpolyethern erfolgen.

### Ausführliche Beschreibung der Erfindung

Die vorliegende Erfindung betrifft Verbindungen, die durch Umesterung von Polyethylenterephthalat (PET) mit entweder mindestens einer organischen Monohydroxylverbindung erhältlich sind, die acht bis achtzehn Kohlenstoffatome aufweist, und/oder mindestens einem Monohydroxylpolyether. Bevorzugt handelt es sich bei dieser organischen Monohydroxylverbindung um lineare oder verzweigte Moleküle mit zehn bis fünfzehn, vorzugsweise neun oder zwölf Kohlenstoffatome, insbesondere um n-Nonanol oder n-Dodecanol. Es sind aber auch ohne weiteres andere gesättigte oder ungesättigte, aliphatische, zykloaliphatische oder aromatische Monohydroxylverbindungen verwendbar, so wie zum Beispiel 2-Ethylhexanol oder Octanol oder auch Cyclohexanol.

Alternativ können auch Monohydroxypolether, insbesondere Alkylether der Polyethylenglykole oder Polypropylenglykole zur Umesterung verwendet werden. Als besonders vorteilhaft haben sich die C1-C4 Alkylether der Polypropylenglykole erwiesen.

Bevorzugt wird zur Herstellung von erfindungsgemässen Verbindungen ein molarer Stoffmengenüberschuss an organischer Monohydroxylverbindung, bzw. Monohydroxylpolyether vorgelegt, vorzugsweise mindestens ein doppelter Stoffmengenüberschuss gegenüber der vorgelegten Stoffmenge Polyethylenterephthalat (PET). In der Regel wird man mindestens einen zehnfachen oder hundertfachen Stoffmengenüberschuss einsetzen, je nach dem beabsichtigten Ausmass der PET-Kettenspaltung. Bevorzugt handelt es sich bei dem vorgelegten Polyethylenterephthalat (PET) um handelsüblichen Gebrauchskunststoff in entsprechend vorbehandelter Form, vorzugsweise um gereinigte und zerkleinerte Flaschen, Filme, Profile, Folien oder Kombinationen davon. Somit eignet sich die Erfindung auch als Basis eines praktischen und wirtschaftlichen Verfahrens zur Entsorgung, bzw. Rezyklierung von technisch sehr häufig und in grossen Mengen anfallenden PET-Abfällen. Die erfindungsgemässen Verbindungen werden bevorzugt im Rahmen von Weichmachern verwendet, die zur Verwendung im Rahmen üblicher Gebrauchskunststoffe oder in reaktiven Klebstoffen geeignet sind. Die Erfindung betrifft auch aus üblichen Gebrauchskunststoffen bestehende, solche Weichmacher umfassende Artikel, vorzugsweise in Form von Formteilen, Filmen, Folien oder Profilen. Bevorzugt bestehen diese Artikel aus üblichen Gebrauchskunststoffen auf der Basis von Homopolymeren und/oder Copolymeren. Diese können insbesondere Monomerkomponenten oder Mischungen oder Kombinationen oder Derivate derselben auf der Basis nachfolgender funktioneller Gruppen umfassen: Olefine, gesättigte oder ungesättigte Carbonsäuren, Acrylate, Alkohole, Amine, Imine, Isocyanate oder Epoxigruppen. Insbesondere handelt es sich bei den besagten Artikeln um Folien auf der Basis von Polyvinylchlorid (PVC), die beispielsweise zur Abdeckung von Dächern, als Fussbodenbelag oder als Fassadenschutz Verwendung finden.

Die Erfindung wird im folgenden Textabschnitt ausführlich anhand repräsentativer Ausführungsbeispiele beschrieben.

### Beispiele

### Herstellung PET-Weichmacher

Alle % Angaben beziehen sich im folgenden auf Gewichtsprozente.

Als Beispiel B1 wurde ein PET-Weichmacher in einer der in EP-0 798 325 B1 offenbarten Methode entsprechenden Art und Weise aus den folgenden Ausgangsstoffen hergestellt:

| | |
|---|---|
| PET | 32.5% |
| Tetrabutylorthotitanat | 0.5% |
| Nonanol N | 67% |

### PVC-Formulierungen

| | Formulierung 1 | Formulierung 2 | Formulierung 3 |
|---|---|---|---|
| PVC Polymer (K-Wert 70) | 100 g | 100 g | 100 g |
| Palamoll 656 | 60 g | | |
| Paltinol 911 | | 60 g | |
| PET Weichmacher B1 | | | 60 g |
| Stabilisator | 2 g | 2 g | 2 g |
| Pigmente/Füllstoffe | 14 g | 14 g | 14 g |

Palatinol 911 (erhältlich von der Firma BASF) beziehungsweise Palamoll 656 (erhältlich von der Firma BASF) sind dem Fachmann bekannte, kommerziell erhältliche Phtalsäureester, beziehungsweise Polyester aliphatischer Dicarbonsäuren. Als Stabilisator wird ein dem Fachmann bekannter Ba/Zn-Stabilisator eingesetzt. Als Pigmente/Füllstoffe wurden Mischungen von Titandioxid, Kreide und gegebenenfalls Russ verwendet.

### Herstellung eines Walzfelles / Pressplatte.

### Walzfell:

Die Edukte werden zu einem Brei gemischt und auf ein Collin Walzwerk bei 180 °C geschüttet. Während 2 Minuten wird bei einer Spaltbreite von 0.5 mm das Gemisch aufgeheizt. Danach wird der Spalt auf 0.8 mm erweitert. Es dauert ca. 4-5 Minuten bis das Gemisch homogen aufgeschmolzen ist. Die homogene Masse wird als rohes Walzfell abgezogen.

### Pressplatte:

Aus dem vorstehend beschriebenem Walzfell wird mit einer Schablone (Dicke 1.2 mm) eine Pressplatte hergestellt. Dazu wird das ausgeschnittene Format (18.5 x 28 cm) während eines Zeitraums von 1 Minute bei einer Temperatur von 180 °C, bei einem Druck von 45 bar und anschliessend 3 Min. bei 95 bar gepresst.

Die Pressplatte wird abgekühlt und kann danach zur Bestimmung der mechanischen und physikalischen Eigenschaften verwendet werden.

Die Walzstabilität wurde ermittelt, indem die Probe auf dem Walzwerk bei 183°C bis zum Kleben auf der Walze gewalzt wurde.

Die Scherstabilität wurde bestimmt, indem die Zersetzungszeit bei 180°C gemessen wurde. Das Drehmoment erlaubt Rückschlüsse auf die Schmelzviskosität.

Die Weichmacheraufnahme wurde bestimmt, indem die Zeit ermittelt wurde, welche das PVC Korn benötigt um den Weichmacher aufzunehmen.

Die weiteren Eigenschaften werden gemäss den bekannten Normen SIA V280 und DIN 16730 bzw. DIN16726 bestimmt. In einem nach der Stand der Technik üblichen Weather-Ometer (hergestellt von der Firma Atlas ; Typ Ci 65) wurde der folgende Prüfzyklus benutzt: 102 Min. Trockenphase, 18 Min. Beregnung, Schwarzeltemp. 63°C.

### Resultate

| | Formulierung 1 | Formulierung 2 | Formulierung 3 |
|---|---|---|---|
| Weichmacheraufnahme | 5:04 | 4:04 | 4:04 |
| (min.:sek.) | | | |
| Walzstabilität (183°C) | 70 min | 95 min | 90 min |
| Scherstabilität | | | |
| (Brabender Plasticorder) | | | |
| (180°C) | | | |
| Zersetzungszeit | 23:24 | 48:48 | 23:04 |
| (min:sek) | | | |
| Mittleres | 11 | 7 | 9 |
| Drehmoment (Nm) | | | |
| Zugfestigkeit | 18 | 20 | 22 |
| (N/mm²) | | | |
| Bruchdehnung | 348% | 324% | 337% |
| Verhalten in Kälte | 1x Bruch | in Ordnung | in Ordnung |
| | 2x in Ordnung | | |
| Weather-Ometer | in Ordnung | in Ordnung | in Ordnung |
| (1000 h) | | | |

## Patentansprüche

1. Verbindungen, erhältlich durch Umesterung von Polyethylenterephthalat (PET) mit entweder mindestens einer organischen Monohydroxylverbindung, die acht bis achtzehn Kohlenstoffatome aufweist, und/oder mindestens einem Monohydroxypolyether.

2. Verbindungen gemäss Anspruch 1, **dadurch gekennzeichnet, dass** es sich bei der organischen Monohydroxylverbindung um lineare oder verzweigte Moleküle mit zehn bis fünfzehn, vorzugsweise neun oder zwölf Kohlenstoffatome, insbesondere um n-Nonanol oder n-Dodecanol handelt.

3. Verbindungen gemäss einem der vorhergehenden Ansprüche, **dadurch gekennzeichnet, dass** ein molarer Stoffmengenüberschuss an organischer Monohydroxylverbindung vorgelegt worden ist, vorzugsweise mindestens ein doppelter Stoffmengenüberschuss gegenüber der vorgelegten Stoffmenge Polyethylenterephthalat (PET).

4. Verbindungen gemäss einem der vorhergehenden Ansprüche, **dadurch gekennzeichnet, dass** es sich bei dem vorgelegten Polyethylenterephthalat (PET) um handelsüblichen Gebrauchskunststoff in entsprechend vorbehandelter Form handelt, vorzugsweise um gereinigte und zerkleinerte Flaschen, Filme, Profile, Folien oder Kombinationen davon.

5. Weichmacher, die zur Verwendung im Rahmen üblicher Gebrauchskunststoffe oder als Zusatzstoff in reaktiven Klebstoffen geeignet sind, umfassend Verbindungen gemäss einem der vorhergehenden Ansprüche.

6. Artikel, bestehend aus üblichen Gebrauchskunststoffen, vorzugsweise in Form von Formteilen, Filmen, Folien oder Profilen, umfassend Weichmacher gemäss Anspruch 5.

7. Artikel gemäss Anspruch 6, **dadurch gekennzeichnet**, das es sich bei den üblichen Gebrauchskunststoffen um Homopolymere und/oder Copolymere auf der Basis von folgenden Monomerkomponenten oder Mischungen oder Kombinationen derselben handelt: Olefine, Carbonsäuren oder deren Derivate, Alkohole oder deren Derivate, Amine oder deren Derivate, Isocyanate oder Epoxiverbindungen.

8. Artikel gemäss einem der Ansprüche 6 oder 7, **dadurch gekennzeichnet, dass** es sich um Folien auf der Basis von Polyvinylchlorid (PVC) handelt.

9. Verfahren zur Herstellung von im Rahmen von Weichmachern für Gebrauchskunststoffe verwendbaren Verbindungen, **dadurch gekennzeichnet, dass** man Polyethylenterephthalat (PET) mit mindestens einer organischen Monohydroxylverbindung umsetzt, die acht bis achtzehn Kohlenstoffatome aufweist, oder alternativ mit einem Monohydroxypolyether.

10. Verfahren gemäss Anspruch 9, **dadurch gekennzeichnet, dass** als organische Monohydroxylverbindung lineare oder verzweigte Moleküle mit zehn bis fünfzehn, vorzugsweise neun oder zwölf Kohlenstoffatome verwendet werden, insbesondere n-Nonanol oder n-Dodecanol.

11. Verfahren gemäss einem der Ansprüche 9 oder 10, **dadurch gekennzeichnet, dass** ein molarer Stoffmengenüberschuss an organischer Hydroxylverbindung vorgelegt wird, vorzugsweise mindestens ein doppelter Stoffmengenüberschuss gegenüber der vorgelegten Stoffmenge Polyethylenterephthalat (PET).

12. Verfahren gemäss einem der Ansprüche 9 bis 11, **dadurch gekennzeichnet, dass** als Polyethylenterephthalat (PET) handelsüblicher Gebrauchskunststoff in entsprechend vorbehandelter Form verwendet wird, vorzugsweise in Form von gereinigten und zerkleinerten Flaschen, Filmen, Profilen, Folien oder Kombinationen davon.
